# EUROPEAN PATENT SPECIFICATION

(11) **EP 1 709 336 B1**
(45) Date of publication and mention of the grant of the patent: **13.05.2015**
(21) Application number: 04798393.7
(22) Date of filing: 04.11.2004
(51) Int. Cl.: F16B 23/00

(54) **MULTI-TIERED-RECESS SCREWS**
SCHRAUBEN MIT MEHRSTUFIGEN AUSSPARUNGEN
VIS A EMPREINTE A PLUSIEURS ETAGES

(30) Priority: 06.11.2003 US 703115
(43) Date of publication of application: 11.10.2006
(73) Proprietor: Uni-Screw Worldwide, Inc., Knoxville, TN 37902 (US)
(72) Inventor: BROOKS, Laurence Antony, Sheffield S10 4ER (GB)
(74) Representative: HGF Limited
(86) International application number: PCT/GB2004/004668
(87) International publication number: WO 2005/047715

(56) References cited:
- WO-A-01/77538
- WO-A-03/025403
- FR-A- 1 585 454
- GB-A- 2 285 940
- GB-A- 2 329 947

## Description

### Background of the Invention

This invention relates to multi-tiered-recess screws, that is to say, screws comprising a driving recess for insertion of a driving tool, which recess comprises a plurality of superimposed recess-tiers of decreasing size. The recess-tiers may be concentric, in which event they are non-circular. Indeed, the invention is particularly concerned with the latter, because these have the additional feature that, whereas the driver has a fixed number of tiers, the screw may have some or all of the recess-tiers, depending on its size and torque driving requirements.

It is a particular feature of this kind of screw that there is a single driver that is suitable for driving a range of sizes of screw. Smaller screws simply have one or two small recesses, while the larger screws have larger recesses also.

GB-A-1150382 appears to be the first disclosure of a screw provided with a multi-tiered recess and a corresponding multi-tiered driver. GB-A-2285940 discloses essentially the same idea. Both these publications describe the advantages provided by the arrangements disclosed. The first is that the recesses are essentially parallel-sided and consequently eliminate cam-out problems that are associated with cross-head recesses. Secondly, they give the possibility of a single driving tool being suitable for driving a wide range of screw sizes.

The single driving tool typically has three (for example) tiers of driving surfaces which are employed to drive large screws having three recess-tiers of recess. However, the same tool can be employed with smaller screws having only two recess-tiers of recess, the largest recess-tier being omitted. Indeed, even smaller screws may have only one, the smallest recess-tier, in their recess and be driven by the smallest tier only of the tool.

GB-A-2329947 discloses a similar arrangement, and WO-A-0177538 discloses recess-tiers that have such a small extent in the recesses of screws and bolts that, at the torques at which the screws are intended to be operated, they cannot be turned unless at least two recess-tiers are both engaged by the tool. Otherwise, the screw is arranged to round out of engagement with the driving tool. This provides a security feature in that only the appropriate tool, having all the requisite driving tiers, will undo the screw.

WO03/025403 discloses a method of manufacture of such screws using cold forming punches. It is possible to make the recesses with some precision, so that the driving tool is a close fit in the recess. This has the very useful feature that recess-tiers can be shallow. Then, screw heads do not need to be large to accommodate the driving tool. Yet, adequate torque can still be applied because a large proportion of the area of each recess is used for torque transmission by virtue of the close tolerance fit. But, equally usefully, the tool fits the screw so closely that, once mated with the driving tool, the screw can be carried solely by the driver when it is offered up to a workpiece. Indeed, with self-tapping wood screws, the connection between driver and screw is so stable that some pressing and simultaneous rotation forces can be applied to the tool, without holding the screw. This can be done without significant risk that the connection will fold as may happen with, for example, Posi-Driv (registered trade mark) screws unless forces are maintained absolutely axial. With the three-tiered screws of the present applicants marketed under the registered trade mark Uni-Screw, the fit is so close that even carrying screws dangling vertically from the driver is possible if carried carefully.

Nevertheless, it would be desirable to improve this feature. This is particularly so with screws having only one or two recess-tiers of recess. It seems that it is partly the plurality of recess-tiers that, at least to some extent, explains why the screw appears to grip the driver so effectively. So, with smaller screws having just one recess-tier of recess the feature is not so evident. It is an object of the present invention to improve that feature.

FR 1 585 454 A discloses a screw and driver system substantially as defined in the preamble of claim 1 and claim 2, respectively.

### Summary of the Invention

In accordance with this invention there is provided a screw and driver system comprising a range of screws and a driver for said range, each screw comprising a head having a driving recess in its surface for engagement by said driver and a longitudinal axis, in which the recess of larger screws in the range have a plurality of superimposed recess-tiers of decreasing size with increasing depth from said surface, each recess-tier having substantially parallel driving surfaces substantially parallel said longitudinal axis, and in which said driver and recess are shaped so that, when the driver is engaged with the recess of any screw in said range, torque applied to the driver is transmitted to the screw through said driving surfaces; wherein, an interference is provided between the driver and the recess causing deformation of the recess when the driver is inserted therein;
characterised in that the smallest tier of said driver comprises a distal end thereof and a proximal end, and said interference comprises a tapering of the cross-section of said smallest tier from said proximal to said distal end, the cross section of the tier intermediate said ends corresponding with the cross section of the smallest recess-tier of a screw in said range, whereby, when the driver is engaged with the recess of a screw, the driving surfaces of the smallest recess-tier of the screw are deformed creating an interference fit between them.

In a second aspect of the present invention, there is provided a screw and driver system comprising a range of screws and a driver for said range, each screw comprising a head having a driving recess in its surface for engagement by said driver and a longitudinal axis, in which the recess of larger screws in the range have a plurality of superimposed recess-tiers of decreasing size with increasing depth from said surface, each recess-tier having substantially parallel driving surfaces substantially parallel said longitudinal axis, and in which said driver and recess are shaped so that, when the driver is engaged with the recess of any screw in said range, torque applied to the driver is transmitted to the screw through said driving surfaces; wherein an interference is provided between the driver and at least one recess-tier causing deformation of the recess when the driver is inserted therein;
characterised in that the smallest recess-tier of the recess of each screw in said range has a bottom end and an open top end, said interference comprising a tapering of the cross-section of said smallest recess-tier from said open top end to said bottom end, the cross section of the recess-tier intermediate said ends corresponding with the cross section of the smallest tier of said driver.

According to either aspect of the present invention, said recess-tiers of said screws may be non-circular polygons in section. The polygons may be concentric. They may be the same polygons. They may be angularly offset with respect to one another. The smaller screws in said range may have only one recess-tier in their recess.

Preferably the screw of either aspect of the present invention may be made by a cold forming process wherein the recess is formed by a punch of corresponding shape to the recess being formed.

It is inherent in all screw and driver arrangements, whether of the type to which the present invention relates or otherwise, that the driver is constructed from a harder material than the screw. The reason for this is self-evident, in that a screw is driven once or twice, whereas a driver drives a multiplicity of screws. Therefore it is essential that screws wear preferentially compared with the driver.

In a preferred embodiment of the first aspect of the present invention, the driver may have a longitudinal axis and an end, and a plurality of superimposed tiers of increasing size with increasing distance from said end, each tier having substantially parallel driving surfaces substantially parallel said longitudinal axis, and whereby, when the driver is engaged with the recess of a screw in said range, torque applied to the driver is transmitted to the screw through said driving surfaces, characterised in that the smallest tier of said driver comprises a distal end thereof and a proximal end, the cross-section of said smallest tier tapering from said proximal to said distal end. Preferably in which said tapering is straight.

Therefore, when the driver is engaged with the recess of a screw, flanks of the walls of the smallest recess-tier are deformed creating an interference fit between them.

Preferably, where said tiers/recess-tiers are polygonal in section and concentric, said tapering is around the entire periphery of the tier or recess-tier, as the case may be. In this way, there is no lateral displacement of the driver with respect to the screw when the driver is inserted, and also that wear on the driver is spread around the entire periphery of the affected tier. Furthermore, not only can the degree of insertion of the driver vary, but also the nature of the engagement is, or could be, more compressive and potentially elastic, rather than any plastic deformation of the screw. Both these factors will tend to reduce wear on the driver.

It is possible, although not preferred, that said tapering may be provided alternatively, or in addition, on other tiers of the driver, or recess-tiers of the screws. Between the smallest recess-tiers/tiers of the screw and driver, the tapering can be relatively great, ensuring that any tolerance in the dimensions of the recess-tier and driving-tier is taken up by the tapering and grip between the driver and screw is reliably effected every time. Nevertheless, the forces needed for insertion are not large, even if there happens to be a tight tolerance between any given driver and screw. Such would not be the case, however, with larger tiers where the force required would increase with the size of the interference between the driver and screw.

### Brief Description of the Drawings

Embodiments of the present invention are further described hereinafter, by way of example only, with reference to the accompanying drawings, in which Figures 1-7 facilitate understanding of the invention and Figures 8A and 8B relate to the claimed invention, wherein:
Figure 1A and B are a perspective view and side view, partly in section, of a screw in accordance with the present invention;
Figures 2A and B are similar views to Figure 1, but of a different screw in accordance with the present invention;
Figures 3A, B and C are two side views and an end view in the direction of arrow C in Figure 3B, respectively, of two punches to produce screws in accordance with the present invention;
Figure 4 is a side view of a driver in accordance with the present invention;
Figures 5A and B are similar views to Figures 1a and b of a different embodiment of the present invention;
Figures 6a and b are similar views to Figures 2a and b of another different embodiment of the present invention;
Figure 7 is a side view of a driver in accordance with another embodiment the present invention; and
Figures 8A and B are side and section views of a driver and screw respectively of further different, but related, embodiments of the present invention.

### Detailed Description of Preferred Embodiments

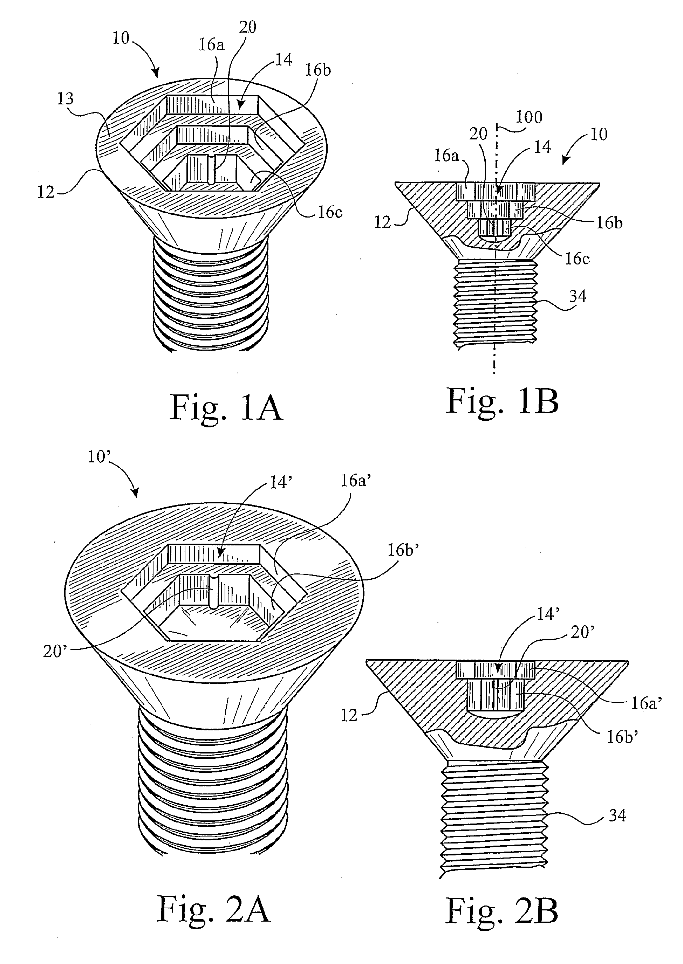

In Figures 1A and B, a screw 10 has a recess 14 in its head 12 which opens from the top surface 13 of the head 12. The recess 14 comprises three super-imposed hexagonal recesses 16a,b,c, each of reducing dimension. The bottom recess 16c includes a rib 20.

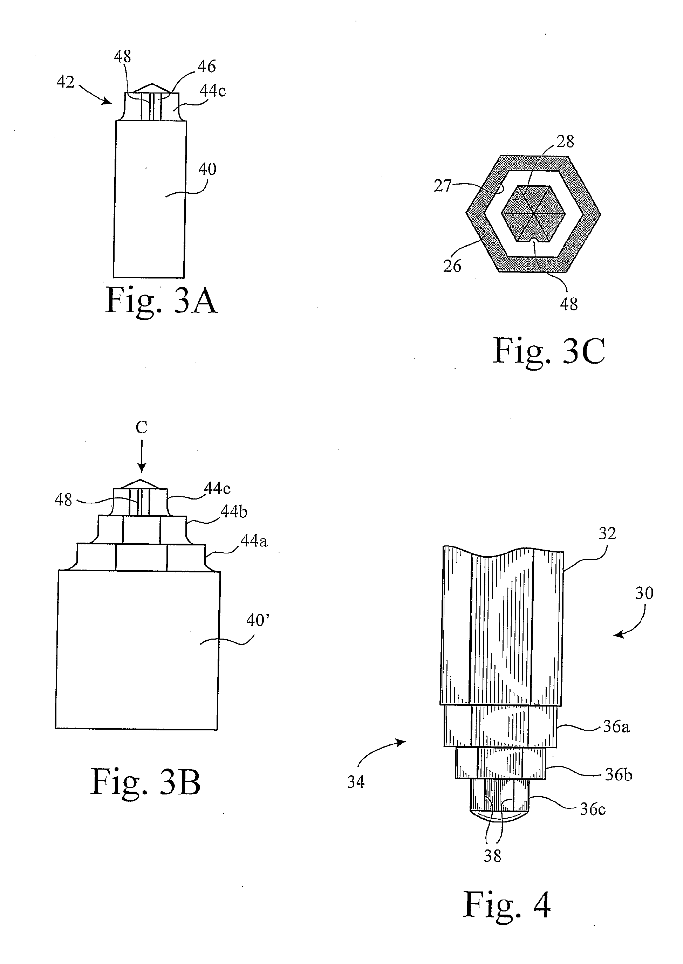

Turning to Figure 4, a driver 30 comprises a shaft 32 and a driving tip 34 comprising three tiers 36a,b,c. The cross sections of the driving tiers 36a,b,c correspond with the cross sections of the recesses 16a,b,c of the screw 10. However, the rib 20 intrudes into the space occupied by the tier 36c of the driver 30 when the driver is engaged with the screw 10. Accordingly, when the driver 30 is inserted into the recess 14, the rib 20 is deformed by the tier 36c so that an interference fit is created in which the recess-tier 16c grips the tier 36c of the driver. Then, the screw 10 is firmly seated on the end of the driver 30 so that the screw can be manipulated to any position without the risk of it falling off the driver 30.

In Figure 2A, a larger screw 10' is illustrated. It has a recess 14' which comprises just two recess-tiers 16a',b'. Here, recess 16b' is deeper than the corresponding recess of the Figure 1 arrangement and is at least equal to the combined depths of recesses 16b,c of the Figure 1 screw. The advantage of this arrangement is that the recess 16a' is also made deeper than that the corresponding recess-tier 16a of the Figure 1 screw. Therefore, more of the tier 36a of the driver 30 is employed to drive the screw. Being a larger screw, greater torque is normally required and this is provided by the extra depth of the largest recess-tier 16a'. Since the recess-tier 16c is missing in this screw, a rib 20' is provided in the recess 16b'. Whereas such a long rib might appear to potentially create an excessive quantity of material to be deformed, it should be borne in mind that only its top half would be engaged by the tier 36b of the driver 30, the bottom half of the recess-tier 16b' being occupied by the smallest tier 36c of the driver 30. The reason why the bottom recess-tier is not provided here is because the torque contribution which it would make to the recess is negligible compared with the other two recesses. Instead, it is omitted so that it does not have the opportunity to fill and prevent full insertion of the driver 30.

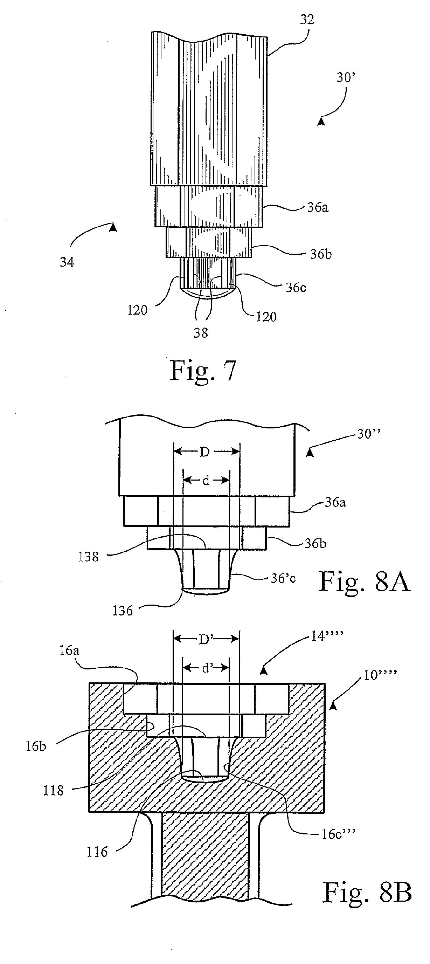

Turning to Figure 3, in Figure 3A is shown a punch 40 having a recess forming head 42 comprising a single hexagonal tier 44c. In the side of one face 46 of the tier 44c there is provided a groove 48 whose function is to form the rib 20 in the recess of a single recess-tier screw (not shown) being worked by the punch 40. Likewise, in Figure 3B, a punch 40' has three tiers 44a,b,c, and is for forming the recess 14 of the screw shown in Figures 1A and B. This likewise has a groove 48 for forming the rib 20. No punch is shown to form the screw of Figure 4A and B, or indeed the screws described below with reference to Figure 8B. Nevertheless, the form of such punch is self-evident.

The diameter of the groove 48 is preferably about 3.0 x 10⁻³ inches in diameter (about 0.08 millimeters) and it has a depth of about half this amount.

An advantage of the present invention is that the rib 20 is only active over a small proportion of the length of engagement of a driver with a recess. At least, this is the case in connection with multi-tier recesses where the interference fit feature is not required to such an extent. With the smaller recesses, however, where it is more necessary in order to retain the screw on the driver, it occupies a greater proportion of the depth of the total recess. Thus, in smaller screws it takes on a greater role in holding the screw in place on the driver than is required in larger screws where the multiplicity of recess-tiers assists in this function.

While only one rib 20 is illustrated, it is of course feasible to provide a rib in each face or, in the case of hexagonal section recess-tiers, in every other face. With multiple ribs, the size of each rib would, of course, be less than the size of a single rib. The advantage of multiple ribs evenly distributed around the longitudinal axis (eg 100, Figure 1B) of the screw is that this facilitates insertion of the driver in the recess 14 and helps to keep the driver central with respect to the recess.

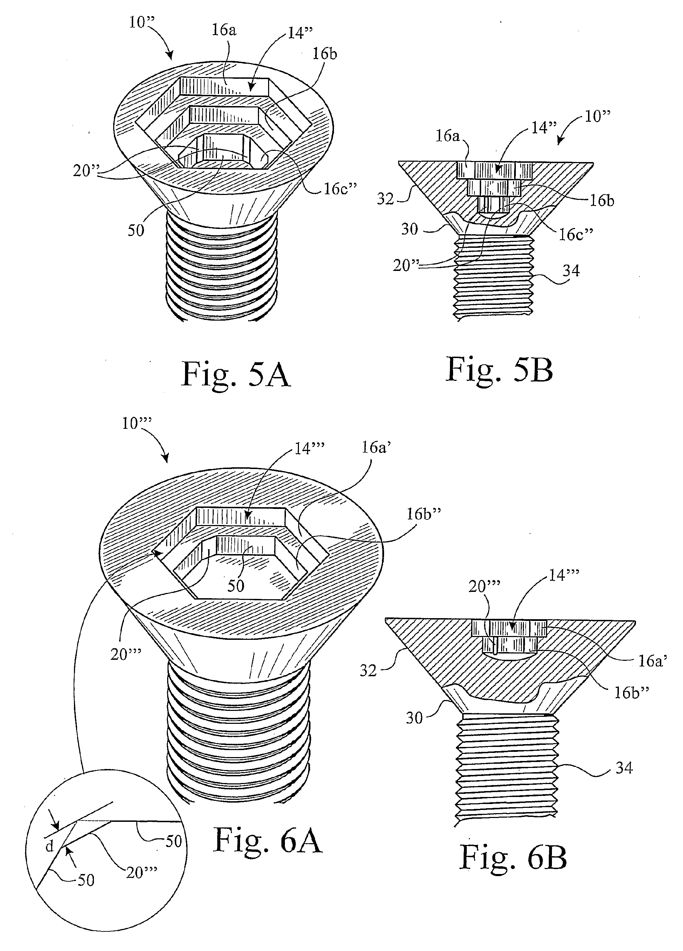

In Figures 5A and B, instead of the rib being placed centrally in a flank 50 of the recess-tier recess 16c", here, the screw 10" has a small rib 20" in each corner between adjacent flanks 50. The driving tool 34 (see Figure 4) has sharp corners 38 between its flanks, and these cut into the ribs 20", making insertion of the tool easier. Nevertheless, there is still created the interference fit between the tool and screw.

Figures 6A and B show a modification where the single rib 20"' is placed in just one corner in the recess-tier 16b". This has the same effect as the Figure 5 arrangement, although may have the disadvantage, as does the Figures 1 and 2 arrangements described above, of tending to decentralise the tool when it is being inserted in the screw 10"'.

The ribs 20" of the Figure 5 arrangement are each smaller than the rib 20"' of the Figure 6 arrangement. Because the rib 20"' is in a corner, where it will more easily be cut and spread by insertion of the tool, it can be thicker than the rib 20. Here it may be between 4 and 10 x 10⁻³ inches (between 0.1 and 0.25 mm) in depth from its surface to the corner (dimension d in the inset to Figure 6a). The ribs 20" however, will each have a depth of between about 1 and 1.5 x 10⁻³ inches (0.025 and 0.05 mm).

Another advantage of the Figures 5 and 6 arrangements is that it is much easier to form the punches 40, 40', because here the punch simply requires a corner of its tier 44c (or all its corners on that tier in the case of the Figure 5 arrangement) to be chamfered to the requisite degree. This avoids the problem of scoring the groove 48 in a flank of the tool.

In Figure 7, an alternative arrangement is proposed, being the mirror image, essentially, of the proposal described above in relation to Figure 1A. Here, instead of forming the rib 20 in the recess, it is (or they are) formed on the driver 30' as ribs 120. This has precisely the same effect as the Figure 1A,B embodiment, but it has the disadvantage that it is the same ribs 120 that are engaged with every screw that is driven. Consequently there is a tendency for the ribs 120 to wear and eventually to cease to be effective. This problem with this embodiment is, however, to a certain extent illusory, because the same parts of the driver always engage the rib 20, so, instead of wearing off the rib 120 on the driver 30', the rib 20 of the screw simply wears a groove in the driver 30. Of course, this problem is minimised with the Figures 1 to 6 arrangements provided there is alternative faces/edges of the driver engaging the ribs. In this respect, a single rib 20 (Figure 1A) divides the wear between six faces of the driver (assuming hexagonal recess-tiers 16). Likewise, a rib in every other face or in every other corner, divides the wear by two. In this respect, another option is to mix the locations of the ribs in the recess so that wear is spread around the driver.

Be that as it may, the driver is almost invariably made of harder material than the screws, particularly in the case of wood screws that are relatively soft, whereby wear preferentially occurs on the screws, rather than the drivers.

Finally, turning to Figures 8A and B, two similar but different arrangements are shown. In Figure 8A, the bottom tier 36c' of a driver 30" has a distal end 136 and a proximal end 138, the latter connected to the rest of the driver 30". The cross-section (hexagonal, in this case) of the tier 36c' tapers from the proximal end to the distal end. In the drawing, it tapers in a curving manner, but it might equally, indeed preferably, taper in a straight manner. The dimensions of the cross-section of the tier 36'c, at some point intermediate the distal and proximal ends 136,138 of the tier 36c', are equal to the corresponding dimensions of the recess-tier 16c (of a screw not having any rib, or indeed any tapering of its recess). Ideally, they are the same at or near the distal end, although this will vary depending on the tolerances of the recess.

Thus, as the driver is engaged in the recess of a screw, the tapering of the bottom tier 36c' of the driver progressively bites into the corresponding recess-tier of the screw. To begin with, it is just a gentle nipping of the flanks of the tier 36c'. However, when the driver is fully engaged, there is a more substantial deformation of the edge of the recess-tier. This is still not substantial in the sense that significant force needs to be applied to fully engage the driver: this is not the purpose. Rather, it is to ensure secure gripping of the driver by the screw so that it can reliably be carried by the driver and does not come loose except by deliberate action. Nevertheless, an additional advantage of this feature is that tight engagement between the bottom tier 36c' of the driver and the corresponding recess-tier of the screw is ensured, despite any flexibility of the tolerances of the screw, and consequently the risk of the driver turning in the recess of the screw is reduced, particularly in connection with small, single recess-tier screws. It is true, of course, that there is a certain tendency by this arrangement to return to the camming-out problems which it is one feature of these multi-tier screws that is normally eliminated. However, the problem only occurs with smaller screws and the smallest recess where the axial force required to overcome any camming-out tendency is fairly minimal.

It is to be noted that this arrangement does not work, of course, with screws 10' as shown in Figures 2A,B. However, there is no reason why these screws should not have the rib 20' as described above, since there will be no duplication of the interference provided.

Figure 8B illustrates the mirror arrangement to that described above in relation to Figure 8A. Here, the tapering is provided in the recess-tier 16c"' of recess 14"" of screw 10"". The tapering is between a bottom end 116 of the recess-tier 16c"' and an open top end 118 thereof. With this screw, a normal driver 30 (Figure 4) is employed and the cross-section of the driver tier 36c is arranged to be only slightly less than the dimension of the open-end 118 of the recess-tier 16"'. In this way, as the driver is inserted, its tip 36c becomes progressively squeezed by the tapering recess-tier 16c'".

Thus, in a preferred arrangement: the diameter (that is, flat to flat dimension) of the largest tier 36a of the driver 30" is 5.9 mm, with a minimum depth of 3.1 mm; the diameter of the middle tier 36b is 3.9 mm, with a depth of 1.1 mm; the diameter (not D, which is edge to edge) of the proximal end 138 of the smallest tier 36c' is 2.6 mm; the diameter (likewise, not d) of the distal end 136 of the smallest tier 36c' is 2.4 mm; and, the depth of tier 36c' is 1.1 mm. With this arrangement, the diameter of the smallest recess-tier of the corresponding screw is 2.5 mm throughout its depth.

If, on the other hand, it is the screws (ie screw 10"") that are provided with the tapering recess-tier: the diameter (that is, flat to flat dimension) of the largest recess-tier 16a is 5.9 mm, with a depth of 1.5 mm; the diameter of the middle recess-tier 16b is 3.9 mm, with a depth of 1.1 mm; the diameter (not D', which is edge to edge) of the open end 118 of the smallest recess-tier 16c'" is 2.6 mm; the diameter (likewise, not d') of the bottom end 116 of the smallest recess-tier 16c'" is 2.4 mm; and, the depth of recess-tier 16c"' is 1.1 mm. With this arrangement, the diameter of the smallest tier of the driver is 2.5 mm throughout its depth.

Although the tapering is shown and described as being applied to all driving faces or flanks of the tier 36c' or recess-tier 16c"', it is not essential that each be flared in this way. In fact only one could be flared, although this would lead to some imbalance. Thus only every other face may be flared, as preferred.

## Claims

1. A screw (10"") and driver (30") system comprising a range of screws and a driver for said range, each screw (10"") comprising a head having a driving recess (14"") in its surface for engagement by said driver and a longitudinal axis, in which the recess of larger screws in the range have a plurality of superimposed recess-tiers (16a,b,c"') of decreasing size with increasing depth from said surface, each recess-tier having substantially parallel driving surfaces substantially parallel said longitudinal axis, and in which said driver and recess are shaped so that, when the driver is engaged with the recess of any screw in said range, torque applied to the driver is transmitted to the screw through said driving surfaces; wherein an interference is provided between the driver and at least one recess-tier causing deformation of the recess when the driver is inserted therein;
**characterised in that**
the smallest tier (36'c) of said driver (30") comprises a distal end (136) thereof and a proximal end (138), and said interference comprises a tapering of the cross-section of said smallest tier from said proximal to said distal end, the cross section of the tier intermediate said ends corresponding with the cross section of the smallest recess-tier of a screw (10"") in said range, whereby, when the driver (30") is engaged with the recess (14"") of a screw, the driving surfaces of the smallest recess-tier of the screw are deformed creating an interference fit between them.

2. A screw (10"") and driver (30") system comprising a range of screws and a driver for said range, each screw (10"") comprising a head having a driving recess (14"") in its surface for engagement by said driver and a longitudinal axis, in which the recess of larger screws in the range have a plurality of superimposed recess-tiers (16a,b,c"') of decreasing size with increasing depth from said surface, each recess-tier having substantially parallel driving surfaces substantially parallel said longitudinal axis, and in which said driver and recess are shaped so that, when the driver is engaged with the recess of any screw in said range, torque applied to the driver is transmitted to the screw through said driving surfaces; wherein an interference is provided between the driver and at least one recess-tier causing deformation of the recess when the driver is inserted therein;
**characterised in that**
the smallest recess-tier (16c"') of the recess of each screw in said range has a bottom end (116) and an open top end (118), said interference comprising a tapering of the cross-section of said smallest recess-tier from said open top end to said bottom end, the cross section of the recess-tier intermediate said ends corresponding with the cross section of the smallest tier of said driver (30").

3. A system as claimed in claim 1 or 2, wherein said recess-tier of said screws are is a non-circular polygon in section.

4. A system as claimed in claim 3, wherein, in said larger screws, said polygons are concentric.

5. A system as claimed in claim 4, wherein said recess-tiers are the same polygons.

6. A system as claimed in claim 5, wherein said recess-tiers are angularly offset with respect to one another.

7. A system as claimed in any preceding claim, wherein the smaller screws in said range have only one recess-tier.

8. A system as claimed in claim 4, wherein said tapering is around the entire periphery of the tier or recess-tier, as the case may be.

9. A screw of a system as claimed in any preceding claim, made by a cold forming process wherein the recess is formed by a punch (40) of corresponding shape to the recess being formed.

10. A driver (30") for the system of claim 1, the driver having a longitudinal axis and an end, and a plurality of superimposed tiers of increasing size with increasing distance from said end, each tier having substantially parallel driving surfaces substantially parallel said longitudinal axis, and whereby, when the driver is engaged with the recess of a screw in said range, torque applied to the driver is transmitted to the screw through said driving surfaces,
**characterised in that**
the smallest tier (36'c) of said driver (30") comprises a distal end (136) thereof and a proximal end (138), the cross-section of said smallest tier tapering from said proximal to said distal end.

11. A driver as claimed in claim 10, in which said tapering is straight.

## Patentansprüche

1. System aus Schrauben (10"") und Dreher (30"), umfassend eine Reihe von Schrauben und einen Dreher für die Reihe, wobei jede Schraube (10"") einen Kopf mit einer Dreheraussparung (14"") in ihrer Oberfläche für einen Eingriff mit dem Dreher sowie eine Längsachse umfasst, wobei die Aussparung größerer Schrauben der Reihe eine Mehrzahl von übereinander liegenden Aussparungsstufen (16a, b, c"') mit zunehmender Tiefe von der Oberfläche abnehmender Größe aufweisen, wobei jede Aussparungsstufe im Wesentlichen parallele Drehoberflächen aufweist, die im Wesentlichen parallel zu der Längsachse sind, und wobei der Dreher und die Aussparung so geformt sind, dass, wenn der Dreher mit der Aussparung einer Schraube der Reihe eingreift, auf den Dreher ausgeübtes Drehmomentüber die Drehoberflächen auf die Schraube übermittelt wird; wobei zwischen dem Dreher und mindestens einer Aussparungsstufe eine Interferenz vorgesehen ist, die eine Verformung der Aussparung bewirkt, wenn der Dreher darin eingeführt wird;
**dadurch gekennzeichnet, dass**
die kleinste Stufe (36'c) des Drehers (30") ein distales Ende (136) und ein proximales Ende (138) umfasst, und wobei die Interferenz eine Verjüngung des Querschnitts der kleinsten Stufe von dem proximalen zu dem distalen Ende umfasst, wobei der Querschnitt der Stufe zwischen den Enden dem Querschnitt der kleinsten Aussparungsstufe einer Schraube (10"") der Reihe entspricht, wobei, wenn der Dreher (30") mit der Aussparung (14"") einer Schraube eingreift, die Drehoberflächen der kleinsten Aussparungsstufe der Schraube verformt werden, so dass dazwischen ein Presssitz erzeugt wird.

2. System aus Schrauben (10"") und Dreher (30"), umfassend eine Reihe von Schrauben und einen Dreher für die Reihe, wobei jede Schraube (10"") einen Kopf mit einer Dreheraussparung (14"") in ihrer Oberfläche für einen Eingriff mit dem Dreher sowie eine Längsachse umfasst, wobei die Aussparung größerer Schrauben der Reihe eine Mehrzahl von übereinander liegenden Aussparungsstufen (16a, b, c"') mit zunehmender Tiefe von der Oberfläche abnehmender Größe aufweisen, wobei jede Aussparungsstufe im Wesentlichen parallele Drehoberflächen aufweist, die im Wesentlichen parallel zu der Längsachse sind, und wobei der Dreher und die Aussparung so geformt sind, dass, wenn der Dreher mit der Aussparung einer Schraube der Reihe eingreift, auf den Dreher ausgeübtes Drehmomentüber die Drehoberflächen auf die Schraube übermittelt wird; wobei zwischen dem Dreher und mindestens einer Aussparungsstufe eine Interferenz vorgesehen ist, die eine Verformung der Aussparung bewirkt, wenn der Dreher darin eingeführt wird;
**dadurch gekennzeichnet, dass**
die kleinste Aussparungsstufe (16c"') der Aussparung jeder Schraube der Reihe ein unteres Ende (116) und ein offenes oberes Ende (118) aufweist, wobei die Interferenz eine Verjüngung des Querschnitts der kleinsten Aussparungsstufe von dem offenen oberen Ende zu dem unteren Ende umfasst, wobei der Querschnitt der Aussparungsstufe zwischen den Enden dem Querschnitt der kleinsten Stufe des Drehers (30") entspricht.

3. System nach Anspruch 1 oder 2, wobei die Aussparungsstufe der Schrauben im Querschnitt ein nicht kreisförmiges Polygon ist.

4. System nach Anspruch 3, wobei die Polygone in den größeren Schrauben konzentrisch sind.

5. System nach Anspruch 4, wobei die Aussparungsstufen die gleichen Polygone darstellen.

6. System nach Anspruch 5, wobei die Aussparungsstufen im Verhältnis zueinander einen Winkelversatz aufweisen.

7. System nach einem der vorstehenden Ansprüche, wobei die kleineren Schrauben der Reihe nur eine Aussparungsstufe aufweisen.

8. System nach Anspruch 4, wobei die Verjüngung entsprechend um die gesamte Peripherie der Stufe oder Aussparungsstufe verläuft.

9. System nach einem der vorstehenden Ansprüche, hergestellte durch ein Kaltformverfahren, wobei die Aussparung durch einen Stempel (40) geformt wird, der eine der geformten Aussparung entsprechende Form aufweist.

10. Dreher (30") für das System aus Anspruch 1, wobei der Dreher eine Längsachse und ein Ende aufweist sowie eine Mehrzahl übereinander liegender Stufen, die mit zunehmender Entfernung von dem Ende größer werden, wobei jede Stufe im Wesentlichen parallele Drehoberflächen aufweist, die im Wesentlichen parallel sind zu der Längsachse, und wobei, wenn der Dreher mit der Aussparung einer Schraube der Reihe eingreift, auf den Dreher ausgeübtes Drehmoment über die Drehoberflächen auf die Schraube übermittelt wird;
**dadurch gekennzeichnet, dass**
die kleinste Stufe (36'c) des Drehers (30") ein distales Ende (136) und ein proximales Ende (138) umfasst, wobei sich der Querschnitt der kleinsten Stufe von dem proximalen zu dem distalen Ende verjüngt.

11. Dreher nach Anspruch 10, wobei die Verjüngung gerade ist.

## Revendications

1. Système de vis (10"") et tournevis (30") comprenant une gamme de vis et un tournevis pour ladite gamme, chaque vis (10"") comprenant une tête ayant une empreinte de vissage (14"") dans sa surface destinée à être mise en prise par ledit tournevis et un axe longitudinal, dans lequel l'empreinte de plus grandes vis dans la gamme a une pluralité d'étages d'empreinte superposés (16a, b, c"') de taille décroissante avec une profondeur croissante à partir de ladite surface, chaque étage d'empreinte ayant des surfaces de vissage sensiblement parallèles qui sont sensiblement parallèles audit axe longitudinal, et dans lequel lesdits tournevis et empreinte sont conformés de sorte que, lorsque le tournevis est en prise avec l'empreinte de toute vis de ladite gamme, le couple appliqué au tournevis soit transmis à la vis par l'intermédiaire desdites surfaces de vissage ; dans lequel une interférence est assurée entre le tournevis et au moins un étage d'empreinte provoquant une déformation de l'empreinte lorsque le tournevis y est inséré ;
**caractérisé en ce que**
le plus petit étage (36'c) dudit tournevis (30") comprend une extrémité distale (136) et une extrémité proximale (138), et ladite interférence comprend un rétrécissement progressif de la section transversale dudit plus petit étage de ladite extrémité proximale à ladite extrémité distale, la section transversale de l'étage entre lesdites extrémités correspondant à la section transversale du plus petit étage d'empreinte d'une vis (10"") dans ladite gamme, de sorte que lorsque le tournevis (30") est en prise avec l'empreinte (14"") d'une vis, les surfaces de vissage du plus petit étage d'empreinte de la vis soient déformées, créant ainsi un ajustement serré entre elles.

2. Système de vis (10"") et tournevis (30") comprenant une gamme de vis et un tournevis pour ladite gamme, chaque vis (10"") comprenant une tête ayant une empreinte de vissage (14"") dans sa surface destinée à être mise en prise par ledit tournevis et un axe longitudinal, dans lequel l'empreinte de plus grandes vis dans la gamme a une pluralité d'étages d'empreinte superposés (16a, b, c"') de taille décroissante avec une profondeur croissante à partir de ladite surface, chaque étage d'empreinte ayant des surfaces de vissage sensiblement parallèles qui sont sensiblement parallèles audit axe longitudinal, et dans lequel lesdits tournevis et empreinte sont conformés de sorte que, lorsque le tournevis est en prise avec l'empreinte de toute vis de ladite gamme, le couple appliqué au tournevis soit transmis à la vis par l'intermédiaire desdites surfaces de vissage ; dans lequel une interférence est assurée entre le tournevis et au moins un étage d'empreinte provoquant une déformation de l'empreinte lorsque le tournevis y est inséré ;
**caractérisé en ce que**
le plus petit étage d'empreinte (16c"') de l'empreinte de chaque vis dans ladite gamme a une extrémité inférieure (116) et une extrémité supérieure ouverte (118), ladite interférence comprenant un rétrécissement progressif de la section transversale dudit plus petit étage d'empreinte de ladite extrémité supérieure ouverte vers ladite extrémité inférieure, la section transversale de l'étage d'empreinte entre lesdites extrémités correspondant à la section transversale du plus petit étage dudit tournevis (30").

3. Système selon la revendication 1 ou 2, dans lequel ledit étage d'empreinte desdites vis est un polygone non circulaire en section.

4. Système selon la revendication 3, dans lequel, dans lesdites vis plus grandes, lesdits polygones sont concentriques.

5. Système selon la revendication 4, dans lequel lesdits étages d'empreinte sont les mêmes polygones.

6. Système selon la revendication 5, dans lequel lesdits étages d'empreinte sont angulairement décalés l'un par rapport à l'autre.

7. Système selon l'une quelconque des revendications précédentes, dans lequel les vis plus petites dans ladite gamme ont un seul étage d'empreinte.

8. Système selon la revendication 4, dans lequel ledit rétrécissement progressif est sur toute la périphérie de l'étage ou de l'étage d'empreinte, selon le cas.

9. Vis d'un système selon l'une quelconque des revendications précédentes, fabriqué par un procédé de formage à froid dans lequel l'empreinte est formée par un poinçon (40) d'une forme correspondant à l'empreinte formée.

10. Tournevis (30") pour le système selon la revendication 1, le tournevis ayant un axe longitudinal et une extrémité, et une pluralité d'étages superposés de taille croissant avec l'augmentation de la distance à partir de ladite extrémité, chaque étage ayant des surfaces de vissage sensiblement parallèles qui sont sensiblement parallèles audit axe longitudinal, et moyennant quoi, lorsque le tournevis est en prise avec l'empreinte d'une vis dans ladite gamme, le couple appliqué au tournevis est transmis à la vis par l'intermédiaire desdites surfaces de vissage,
**caractérisé en ce que**
le plus petit étage (36'c) dudit tournevis (30") comprend une extrémité distale (136) et une extrémité proximale (138), la section transversale dudit plus petit étage se rétrécissant progressivement de ladite extrémité proximale vers ladite extrémité distale.

11. Tournevis selon la revendication 10, dans lequel ledit rétrécissement progressif est droit.
